(19) **Europäisches Patentamt / European Patent Office / Office européen des brevets**

(11) **EP 4 397 643 A1**

(12) ## EUROPEAN PATENT APPLICATION
published in accordance with Art. 153(4) EPC

(43) Date of publication:
**10.07.2024 Bulletin 2024/28**

(21) Application number: **22864280.7**

(22) Date of filing: **18.08.2022**

(51) International Patent Classification (IPC):
**C04B 35/596** (2006.01)   **F16C 19/06** (2006.01)
**F16C 33/32** (2006.01)

(52) Cooperative Patent Classification (CPC):
**C04B 35/584; F16C 19/06; F16C 33/32;**
Y02T 10/86

(86) International application number:
**PCT/JP2022/031184**

(87) International publication number:
**WO 2023/032695 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2021 JP 2021140548**

(71) Applicant: **NTN Corporation
Osaka-shi, Osaka 530-0005 (JP)**

(72) Inventors:
• **ITO, Yuta
Kuwana-shi, Mie 511-0867 (JP)**
• **HAYAKAWA, Yasutake
Kuwana-shi, Mie 511-0867 (JP)**

(74) Representative: **Marks & Clerk LLP
15 Fetter Lane
London EC4A 1BW (GB)**

(54) **SILICON NITRIDE SINTERED BODY, MACHINE PART, AND BEARING**

(57)    To provide a silicon nitride sintered body, a machine part and a bearing that have superior mechanical properties and sliding properties. A rolling element 4 is a silicon nitride sintered body including a silicon nitride particle, a rare earth element and an aluminum element. In a range in which the sum of the area of the upper-size crystal grain diameter within a range where the crystal grain diameter of a $\beta$-type $Si_3N_4$ particle in the silicon nitride sintered body has the crystal orientation of 15-180 degrees, is 30% relative to an area of the total crystal grain diameter, the crystal grain diameter of the $\beta$-type $Si_3N_4$ particle is 1-4 $\mu$m by circle equivalent diameter and/or the aspect ratio of the $\beta$-type $Si_3N_4$ particle is 3-6.

Fig.2

**Description**

TECHNICAL FIELD

The present invention relates to a silicon nitride sintered body, a machine part, and a bearing that are superior in mechanical property and sliding property.

BACKGROUND ART

A silicon nitride ($Si_3N_4$) sintered body has superior mechanical property and corrosion resistance in a wide temperature range between a low temperature and a high temperature, and thus the silicon nitride sintered body is widely used in an engine component, a cutting tool, a sliding member, etc. In particular, the silicon nitride sintered body applied to the sliding member decreases a friction coefficient for lubrication and also has superior wear resistance, so that the demand of the silicon nitride sintered body applied to a rolling element in a bearing have been recently increasing.

In a bearing component such as a rolling element that employs the silicon nitride sintered body, it has been proposed that the mechanical strength or the wear resistance relating to its rolling lifetime is improved by, for example, adjusting a composition of the sintered body (the kind or adding amount of a sintering additive), the crystal grain diameter, a state of each sintering additive in the sintered body, or a manufacturing process. For example, Patent Document 1 discloses a ceramics complex material in which a titanium (Ti) compound having a ratio of a long side to a short side (an aspect ratio) of 2 or more is dispersed at 1-50 wt% into a silicon nitride matrix having a mean particle diameter of 10 $\mu$m or less.

PRIOR ART DOCUMENT

PATENT DOCUMENT

Patent Document 1: JP H06-122563 A

SUMMERY OF THE INVENTION

PROBLEMS TO BE SOLVED BY THE INVENTION

The technique disclosed in Patent Document 1 improves the strength and the toughness of the sintered body, however titanium nitride (TiN) whisker having large shape anisotropy (for example, the aspect ratio of 15) on the sliding surface of the sintered body appears as a spinous protrusion, which might form a starting point of break or increase the attackablity to a mating material. Accordingly, a rolling lifetime of the bearing component might be deteriorated.

An object of the present invention is, in order to solve such problems, to provide a silicon nitride sintered body that is superior in mechanical property and sliding property, and a machine part and a bearing each including the silicon nitride sintered body.

MEANS FOR SOLVING THE PROBLEMS

A silicon nitride sintered body of the present invention includes a silicon nitride particle, a rare earth element and an aluminum element. In a range in which the sum of the area of the upper-size crystal grain diameter within a range where the crystal grain diameter of a $\beta$-type $Si_3N_4$ particle in the silicon nitride sintered body has the crystal orientation of 15-180 degrees, is 30% relative to the area of the total crystal grain diameter, the crystal grain diameter of the $\beta$-type $Si_3N_4$ particle is 1-4 $\mu$m by circle equivalent diameter and/or the aspect ratio of the $\beta$-type $Si_3N_4$ particle is 3-6.

The silicon nitride sintered body may include at least one metal element selected from among titanium (Ti), zirconium (Zr), hafnium (Hf), tungsten (W), molybdenum (Mo), tantalum (Ta), niobium (Nb), iron (Fe), and chromium (Cr).

The silicon nitride sintered body may include Fe, and the content of Fe may be less than 0.5 wt% relative to the total weight of the silicon nitride sintered body.

A ratio of an area of a snowflake in an image of a section of the silicon nitride sintered body acquired at the magnification of 100 may be 7% or less relative to the total sectional area in the image.

The crushing strength of a 3/8 inch ball formed of the silicon nitride sintered body may be 20 kN or more.

A silicon nitride sintered body of the present invention includes a silicon nitride particle, a rare earth element and an aluminum element. A ratio of an area of a snowflake in an image of a section of the silicon nitride sintered body acquired at the magnification of 100 is 7% or less relative to the total sectional area in the image.

A machine part of the present invention includes the silicon nitride sintered body of the present invention.

Further, a bearing of the present invention includes the machine part of the present invention, as a bearing component.

The machine part may be configured as a bearing rolling element. The bearing rolling element may have a rolling lifetime of 600 hours or more measured by a radial-type bearing tester under a condition of the maximum contact surface pressure of 3.6 GPa and the rotation speed of 3,000 minute$^{-1}$.

EFFECT OF THE INVENTION

The silicon nitride sintered body of the present invention includes the silicon nitride particle, the rare earth element and the aluminum element. In addition in the range in which the sum of the area of the upper-size crystal grain diameter within the range where the crystal grain diameter of the $\beta$-type $Si_3N_4$ particle in the silicon nitride sintered body has the crystal orientation of 15-180 degrees, is 30% relative to the area of the total crystal grain diameter, the crystal grain diameter of the $\beta$-type $Si_3N_4$ particle is 1-4 $\mu$m by circle equivalent diameter and/or the aspect ratio of the $\beta$-type $Si_3N_4$ particle is 3-6. Accordingly, the silicon nitride sintered body can be realized that has superior crushing strength, mechanical property and sliding property.

The silicon nitride sintered body of the present invention includes the silicon nitride particle, the rare earth element and the aluminum element. In addition, the ratio of the area of the snowflake (aggregate of fine defects) in the image of the section of the silicon nitride sintered body acquired at the magnification of 100 is 7% or less relative to the total sectional area in the image. Accordingly, flaking caused from the snowflake as a starting point can be suppressed, and the silicon nitride sintered body can be realized that has superior mechanical property and sliding property.

The machine part of the present invention includes the silicon nitride sintered body of the present invention. Accordingly, the machine part can be favorably used as, for example, a bearing rolling element. Consequently, flaking caused from the defect can be suppressed and long lifetime of the bearing rolling element can be realized. Further, the bearing of the present invention includes the machine part of the present invention, as a bearing component. Accordingly, the bearing can be realized that has superior sliding property and rolling lifetime.

BRIEF DESCRIPTION OF THE DRAWINGS

Fig. 1 is a general view showing an electron back scattering diffraction (EBSD) method.
Fig. 2 is a sectional view of a rolling bearing to which a silicon nitride sintered body according to the present invention is applied.
Figs. 3 (a) and 3 (b) are sectional images of a ceramic ball of Example 1.
Figs. 4 (a) and 4 (b) are sectional images of a ceramic ball of Example 18.
Figs. 5 (a) and 5 (b) are sectional images of a ceramic ball of Comparative example 1.
Fig. 6 is one example of an image of a crystal orientation map by an EBSD measurement.
Fig. 7 is a general view showing a crushing test.

Hereinafter, an embodiment of the present invention is described.

Silicon nitride sintered body

A silicon nitride sintered body according to the present invention contains $\beta$-type silicon nitride particle as a main component, and at least a rare earth element and an aluminum element. The rare earth element is derived from a sintering additive containing a rare earth element, employed in producing the silicon nitride sintered body. The aluminum element is derived from a sintering additive containing an aluminum element, employed in producing the silicon nitride sintered body. Each of the rare earth element and the aluminum element forms a grain boundary phase of, for example, a Si-RE-Al-O-N compound (RE is a rare earth element), which densifies the silicon nitride sintered body.

Examples of the rare earth element in the silicon nitride sintered body include, but not especially limited thereto, yttrium (Y), lanthanum (La), cerium (Ce), samarium (Sm), neodymium (Nd), dysprosium (Dy), europium (Eu), and erbium (Er). The silicon nitride sintered body may contain only one or two or more of these rare earth elements. Of these rare earth elements, yttrium (Y), lanthanum (La), and erbium (Er) are preferable from a viewpoint of adjustment of the crystal grain diameter. Examples of the sintering additive containing the rare earth element include oxide of the rare earth element and nitride of the rare earth element.

The content of the rare earth element is, for example, 2-20 wt% in terms of oxide, relative to the total weight of the silicon nitride sintered body. With the content of the rare earth element within the above-described range, the silicon nitride sintered body is easily densified and the amount of the grain boundary phase is suppressed, so that superior mechanical strength of the silicon nitride sintered body can be obtained. The content of the rare earth element is preferably 2-15 wt%, may be 4-10 wt% or 4-6 wt%.

The content of the aluminum element is, for example, 0.5-10 wt% in terms of oxide, relative to the total weight of the silicon nitride sintered body. With the content of the aluminum element within the above-described range, the silicon nitride sintered body is easily densified and the amount of the grain boundary phase is suppressed, so that superior mechanical strength of the silicon nitride sintered body can be obtained. The content of the aluminum element is preferably 0.5-6 wt%, may be 2-6 wt%. Examples of the sintering additive containing the aluminum element include aluminum oxide and aluminum nitride.

In the silicon nitride sintered body, the content of the rare earth element (in terms of oxide) and the content of the aluminum element (in terms of oxide) may be identical to each other, or the content of the rare earth element (in terms of oxide) may be larger or smaller than the content of the aluminum element (in terms of oxide). The total of the content of the rare earth element (in terms of oxide) and the content of the aluminum element (in terms of oxide) is, for example, 2-18 wt%, preferably 4-15 wt%, more preferably 9-13 wt%, relative to the total weight of the silicon nitride sintered body.

In a case in which the oxide of the rare earth element is employed as a sintering additive, the content of the rare earth element may be calculated as an adding amount of the sintering additive relative to the total amount of the raw material powder. In a case in which aluminum oxide ($Al_2O_3$) is employed as a sintering additive, the content of the aluminum element may be calculated as a content of the sintering additive relative to the total amount of the raw material powder.

Further, the content of each of the rare earth element and the aluminum element is determined using an X-ray fluorescence analysis device (XRF), an energy dispersive X-ray spectroscopy (EDX), or an inductively coupled plasma (ICP) atomic emission spectroscopy. Specifically, the content of each of the rare earth element and the aluminum element in the silicon nitride sintered body is determined using the above-described device and is converted into the oxide of the rare earth element (RE) ($RE_2O_3$ or $REO_2$) or the aluminum oxide ($Al_2O_3$).

The silicon nitride sintered body may contain a component other than the rare earth element and the aluminum element, derived from the sintering additive.

The silicon nitride sintered body may further contain at least one metal element selected from among titanium (Ti), zirconium (Zr), hafnium (Hf), tungsten (W), molybdenum (Mo), tantalum (Ta), niobium (Nb), iron (Fe), and chromium (Cr). These metal elements may be added into the raw material powder as, for example, metal simple substance, oxide of the metal element, or nitride of the metal element.

The content of the metal element (the total content in a case of two or more elements) is, for example, 0.1-5 wt%, preferably 0.5-3 wt%, or 1-3 wt% in terms of oxide, relative to the total weight of the silicon nitride sintered body. The content of the metal element may be calculated by the method similar to those for the rare earth element and the aluminum element.

The silicon nitride sintered body may contain iron (Fe) as the metal element. The content of the iron may be, for example, 0.05 wt% or more, or 0.1 wt% or more, relative to the total weight of the silicon nitride sintered body. The iron contained in the silicon nitride sintered body can improve the fracture toughness of the silicon nitride sintered body and suppress the progress of a crack. However, in a case in which the content of the iron becomes larger, an iron particle is exposed to a sphere surface and the exposed iron particle is desulfied, which might cause the flaking. From such a viewpoint, the content of the iron is preferably less than 0.5 wt%, relative to the total weight of the silicon nitride sintered body. The iron is added into the raw material powder as, for example, iron powder or iron oxide ($Fe_2O_3$).

Shape characteristics of β-type silicon nitride particle in the silicon nitride sintered body are now described. There are α-phase and β-phase as phases of the silicon nitride powder. A particle of the β-phase is deposited when the particle transits from the α-phase to the β-phase in sintering, and then the particle grows up and forms an anisotropic shape structure.

In one aspect of the silicon nitride sintered body according to the present invention, at least one of a crystal grain diameter and an aspect ratio of a β-type $Si_3N_4$ particle within a specified measurement range, is set in a specified numeral range. The crystal grain diameter and the aspect ratio are calculated by an analysis based on an electron back scattering diffraction (EBSD) method. The EBSD method uses, for example, a Field Emission Scanning Electron Microscope (FE-SEM) to analyze a crystal orientation based on an EBSD pattern obtained through the EBSD. The magnification of the FE-SEM image used in the analysis is, for example, 1,000-2,000.

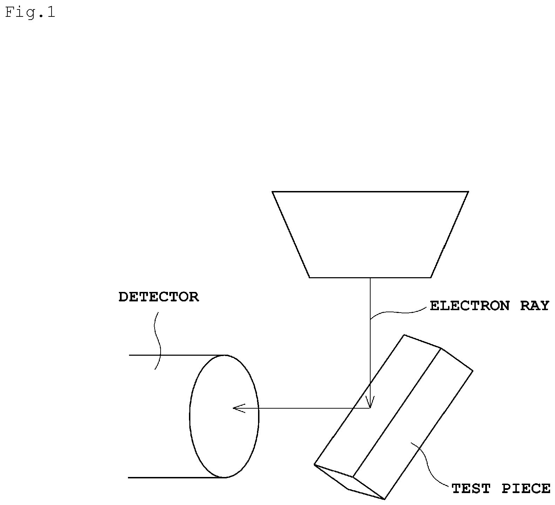

Fig. 1 is a general view showing a measuring principle of the EBSD method. As shown in Fig. 1, a specified surface of a test piece (the silicon nitride sintered body) placed in the field emission scanning electron microscope is irradiated with an electron ray to acquire a diffraction pattern of the electron ray reflected on the surface, by a detector. The test piece is placed to set an appropriate angle between the test piece and a plane orthogonal to an optical axis of the electron ray that is incident on the test piece. The EBSD pattern is projected on a fluorescent screen of the detector, and a surface of the test piece is scanned with the electron ray, so that orientation information is mapped. Accordingly, the crystal orientation in a specified local area of the crystalline material can be obtained. Fig. 1 shows an analysis based on a reflection EBSD method, however an analysis based on a transmission EBSD method may be also employed.

The crystal grain diameter and the aspect ratio are calculated from a range where the sum of the area of the upper-size crystal grain diameters is 30% relative to the area of the total crystal grain diameter as a group of the crystal grain diameters of the β-type $Si_3N_4$ particles having the same crystal orientation within a range of the crystal orientation of 15-180 degrees is deemed as one crystal grain diameter. The range fulfills the confidence index (CI) of 0.1 or more.

The above-described silicon nitride sintered body fulfills at least one of that the crystal grain diameter of the β-type $Si_3N_4$ particle in the above-described range is 1-4 μm by circle equivalent diameter and that the aspect ratio of the β-type $Si_3N_4$ particle in the above-described range is 3-6. Thus, as described in the following example, superior crushing strength and superior mechanical property can be obtained. Also, such a setting of the crystal grain diameter and the aspect ratio can suppress generation of pores. The crystal grain diameter is preferably 1-3 μm. The aspect ratio is preferably 3-5.

The crystal grain diameter of the β-type $Si_3N_4$ particle is calculated by the following formula (1).

Math 1

$$\text{Crystal grain diameter (circle equivalent diameter)} =$$

$$\sqrt{4 \times (\textit{area of crystal grain diameter in a group of same crystal orientaion}) \div \pi}$$

$$\cdots (1)$$

The "area of crystal grain diameter particle in a group of same crystal orientation" in the formula (1) is calculated using software.

The aspect ratio is a ratio (L/S) of a long side L to a short side S of the β-type $Si_3N_4$ particle in the above-described range. Specifically, the long side L and the short side S of each β-type $Si_3N_4$ particle are measured and each aspect ratio is calculated. The aspect ratio is an average of the calculated aspect ratios. The dense of the silicon nitride sintered body can be enhanced by employing the shapes of the β-type $Si_3N_4$ particles within a specified aspect range.

In the above-described silicon nitride sintered body, it is preferable that an area ratio of a snowflake in an image of any section acquired at magnification of 100, relative to the total sectional area in the image is 7% or less. The area ratio of the snowflake is more preferably 5% or less, further more preferably 3% or less. The snowflake is aggregate of fine defects, which affect wear resistance or durability, and thus small area ratio of the snowflake is preferable.

As described in the following example, the snowflake is observed as a white spot by a dark-field SEM observation on the section. The snowflake cannot be observed by a bright-field SEM observation. An area ratio of the snowflake is calculated by binarizing a dark-field SEM image using an image analyzing software.

It is preferable that the silicon nitride sintered body of the present invention does not have a pore of 50 μm or more in a surface layer portion (for example, a portion within 500 μm from the surface of the silicon nitride sintered body), more preferable that the silicon nitride sintered body does not have a pore of 30 μm or more, and further more preferable that the silicon nitride sintered body does not have a pore of 10 μm or more. The presence of the pore in the surface layer portion might cause flaking from the pore as a starting point. The pore may be checked by the SEM observation on a cutting surface of the silicon nitride sintered body to which a mirror polishing is applied. The diameter of the pore may be calculated as, for example, a square root of an enveloping area of the pore (the diameter of the pore = √ (the enveloping area of the pore)) .

The silicon nitride sintered body of the present invention has superior mechanical property, and for example, it is preferable that the crushing strength of a 3/8 inch ball formed of the silicon nitride sintered body is 20 kN or more. The crush strength may be, for example, 30 kN or less. The crushing strength may be measured by, for example, a two balls crushing test described in the following example.

In another aspect of the silicon nitride sintered body of the present invention, an area ratio of the snowflake in an image of any section acquired at magnification of 100, relative to the total area of the image is 7% or less. In this aspect, the area ratio of the snowflake is preferably 5% or less, and more preferably 3% or less.

Another aspect may also have the shape characteristics and physical property of the above-described silicon nitride sintered body.

Manufacturing of the silicon nitride sintered body of the present invention is now described.

The silicon nitride sintered body of the present invention is basically manufactured through a mixing step that mixes raw material powder containing a silicon nitride powder and a sintering additive, a molding step that molds the obtained mixed powder into a molded body, and a sintering step that sinters the molded body.

In the mixing step, a specified amount of a binder component (for example, organic binder) is added to the raw material powder and mixed together using a ball mill so as to form a molding powder. In the molding step, a molded body having a desired shape is formed from the molding powder through a known molding method such as a CIP (Cold Isostatic Press) molding and a press molding. A degreasing step may be performed as needed after the molding step.

The degreasing step is performed by, for example, heating the molded body at a specified temperature in a degreasing furnace.

In the sintering step, a heat treatment in an inert atmosphere such as a nitrogen atmosphere and an argon atmosphere, at a temperature of 1, 600-1, 950 °C (preferably 1, 600-1, 900 °C) is applied to the molded body, so as to sinter the molded body. The sintering time is, for example, 3-10 hours. Examples of the sintering method include a pressureless sintering, an atmospheric pressure sintering, and a pressure sintering (hot pressing). In the atmospheric pressure sintering, the pressure is set to, for example, 0.1-10 MPa. In the sintering step, a primary sintering and a secondary sintering may be performed under different pressures.

The obtained sintered body may be subjected to a HIP (Hot Isostatic Press) treatment after the sintering step. The HIP treatment is performed by, for example, keeping a temperature of 1,500-1,700 °C for a specified time under gas pressure of 100 MPa or more.

In manufacturing the silicon nitride sintered body, the content of the silicon nitride powder employed in the raw material powder may be preferably 70-97 wt%, more preferably 80-97 wt%, or 85-92 wt%, relative to the total weight (excluding a binder component in mixing) of the raw material powder. The mean particle diameter of the silicon nitride powder may be, for example, 0.5 $\mu$m or less.

As the sintering additive employed in the raw material powder, a sintering additive containing a rare earth element and a sintering additive containing an aluminum element are employed, and a sintering additive containing an oxide of a rare earth element and a sintering additive containing an oxide of an aluminum element are preferably employed. Examples of the sintering additive containing a rare earth element include $Y_2O_3$, $La_2O_3$, $CeO_2$, $Sm_2O_3$, $Nd_2O_3$, $Dy_2O_3$, $Eu_2O_3$, and $Er_2O_3$. Only one or two or more of these sintering additives may be employed.

The raw material powder may contain materials other than the silicon nitride powder, the sintering additive containing the rare earth element, and the sintering additive containing the aluminum element. For example, a metal compound containing at least one of titanium (Ti), zirconium (Zr), hafnium (Hf), tungsten (W), molybdenum (Mo), tantalum (Ta), niobium (Nb), iron (Fe), and chromium (Cr) may be added into the raw material powder. The metal compound may be added into the raw material powder as, for example, metal simple substance, oxide of the metal element, or nitride of the metal element. For example, the metal compound may be added into the raw material powder as a sintering additive containing a transition metal element, such as $TiO_2$, $Fe_2O_3$, and $Cr_2O_3$.

The mean particle diameter of the sintering additive may be normally 10 $\mu$m or less, 5 $\mu$m or less, 3 $\mu$m or less, 1 $\mu$m or less, or 0.4 $\mu$m or less, which depends on the type of the sintering additive.

The shape of the silicon nitride sintered body of the present invention is not especially limited, and thus a spherical shape, a cylindrical shape, a conical shape, a truncated conical shape, or a rectangular parallelepiped shape may be appropriately selected based on its usage.

Usage of silicon nitride sintered body

The silicon nitride sintered body of the present invention is suitably applied to a machine part used in a rolling portion or a sliding portion because of its superior mechanical property and sliding property. The machine part of the present invention employs the silicon nitride sintered body of the present invention in a portion or the whole of its structure. Examples of the machine part include a sliding member, a bearing component, a roll material for rolling, a compressor vane, and an engine component such as a gas turbine vane. Examples of the bearing member include an inner ring raceway ring, an outer ring raceway ring, a bearing rolling element, and a cage. A bearing of the present invention employs the machine part in a portion or the whole of its structure. Examples of the bearing include a rolling bearing, a sliding bearing, a linear guide bearing, a ball screw, and a linear bearing. In particular, a rolling bearing that employs the silicon nitride sintered body in a bearing rolling element is preferable as the bearing of the present invention because of its superior rolling lifetime.

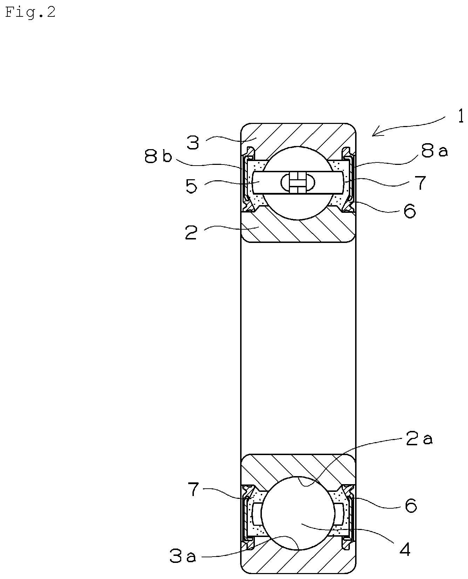

Fig 2 shows one example to which the silicon nitride sintered body is applied. Fig. 2 is a sectional view of a deep groove ball bearing. A rolling bearing 1 includes an inner ring 2 having an inner ring raceway surface 2a on an outer peripheral surface, an outer ring 3 having an outer ring raceway surface 3a on an inner peripheral surface, and a plurality of balls (rolling elements) 4 disposed between the inner ring raceway surface 2a and the outer ring raceway surface 3a. The inner ring 2 and the outer ring 3 are disposed coaxially to each other. The balls 4 are formed by the silicon nitride sintered body. The ball 4 is retained by a cage 5. Both openings 8a, 8b in an axial direction of the inner and outer rings are sealed by seal member 6, and a grease composition 7 is sealed around at least the balls 4. The grease composition 7 is interposed between the balls 4 and the raceway surfaces to lubricate the balls 4. In the example shown in Fig. 2, the silicon nitride sintered body is applied to the ball, however the silicon nitride sintered body may be applied to a roller in a case of a roller bearing.

EXAMPLE

Examples 1 to 10, and 18 to 22, and Comparative examples 1 and 2

A specified amount of an organic binder was added to the raw material powder having the compound rate shown in Table 1, and they were mixed by a ball mill to form a molded body by the CIP method. The obtained molded body was degreased in a degreasing furnace and sintered in a nitrogen atmosphere (pressure of normal pressure) for four hours at a temperature of 1,750 °C. Further, the HIP treatment was applied to the obtained sintered body in a nitrogen atmosphere (pressure of 100 MPa) for one hour at a temperature of 1,700 °C to form the silicon nitride sintered body.

Examples 11 to 17, 23 and 24, and Comparative example 3

A specified amount of an organic binder was added to the raw material powder having the compound rate shown in Table 1, and they were mixed by a ball mill and press-molded at a molding pressure of 30MPa to form the molded body by the CIP method. Thereafter, the molded body was subjected to a primary sintering in a nitrogen atmosphere (pressure of 0.1 MPa) for three hours at a temperature of 1,650 °C and then a secondary sintering in a nitrogen atmosphere (pressure of 8 MPa) for three hours at a temperature of 1,650 °C.

The obtained silicon nitride sintered body was polished to form a ceramic ball having 3/8 inches (diameter of 9.525 mm). Various physical properties and rolling fatigue performance thereof were evaluated.

Table 1

| | | Raw material powder (wt%) | | | | | |
|---|---|---|---|---|---|---|---|
| | Si$_3$N$_4$ | Rare earth element | | | Al element | Oxide of Ti, W, Mo, etc. | Fe powder |
| | | Y$_2$O$_3$ | Er$_2$O$_3$ | La$_2$O$_3$ | Al$_2$O$_3$ | | |
| Example 1 | residual | 4 | - | - | 5 | 1 | - |
| Example 2 | residual | 6 | - | - | 6 | 2 | - |
| Example 3 | residual | - | 4 | - | 5 | 1 | - |
| Example 4 | residual | - | 5 | - | 6 | 2 | - |
| Example 5 | residual | - | 4 | - | 5 | 1 | - |
| Example 6 | residual | - | 5 | - | 6 | 2 | - |
| Example 7 | residual | 2 | - | - | 2 | 1 | 0.1 |
| Example 8 | residual | 2 | - | - | 2 | 1 | 0.4 |
| Example 9 | residual | 6 | - | - | 3 | 1 | 0.4 |
| Example 10 | residual | 6 | - | - | 3 | 2 | 0.4 |
| Example 11 | residual | - | - | 2 | 0.5 | 1 | - |
| Example 12 | residual | - | - | 2 | 3 | 1 | - |
| Example 13 | residual | - | - | 10 | 0.5 | 1 | - |
| Example 14 | residual | - | - | 10 | 3 | 1 | - |
| Example 15 | residual | - | - | 15 | 0.5 | 1 | - |
| Example 16 | residual | - | - | 15 | 3 | 1 | - |
| Example 17 | residual | - | - | 15 | 3 | 2.5 | - |
| Example 18 | residual | 10 | - | - | 6 | 2 | - |
| Example 19 | residual | 6 | - | - | 10 | 2 | - |
| Example 20 | residual | - | 10 | - | 5 | 2 | - |
| Example 21 | residual | - | 4 | - | 10 | 2 | - |

(continued)

| | Raw material powder (wt%) | | | | | | |
|---|---|---|---|---|---|---|---|
| | Si$_3$N$_4$ | Rare earth element | | | Al element | Oxide of Ti, W, Mo, etc. | Fe powder |
| | | Y$_2$O$_3$ | Er$_2$O$_3$ | La$_2$O$_3$ | Al$_2$O$_3$ | | |
| Example 22 | residual | 6 | - | - | 3 | - | 0.5 |
| Example 23 | residual | - | - | 20 | 3 | 1 | - |
| Example 24 | residual | - | - | 5 | 10 | 1 | - |
| Comparative example 1 | residual | 1 | - | - | 1 | 1 | - |
| Comparative example 2 | residual | - | 2 | - | 5 | 2 | - |
| Comparative example 3 | residual | - | - | 1 | 1 | 1 | - |

Section observation

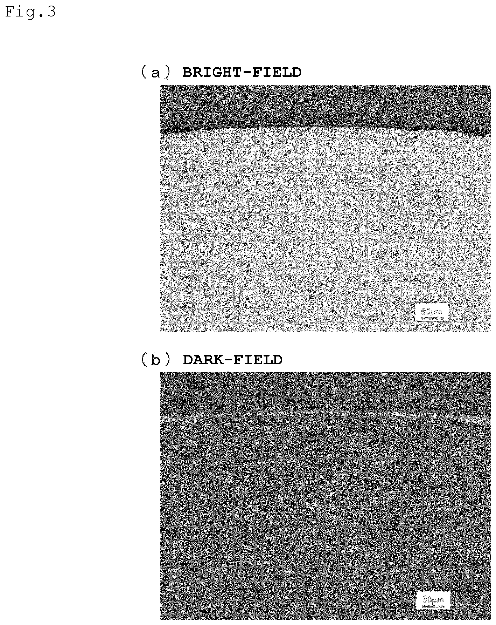

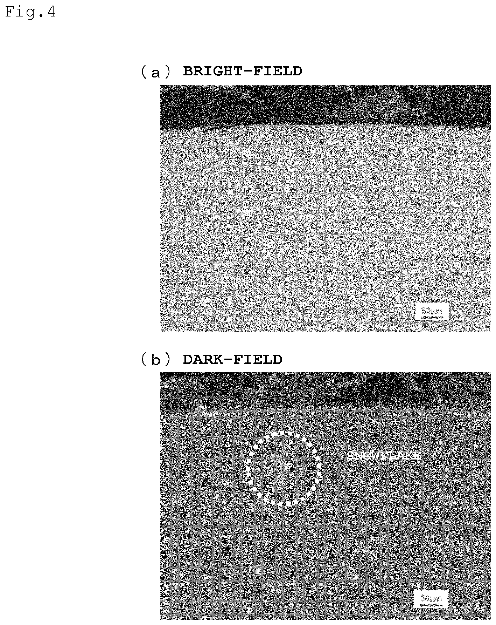

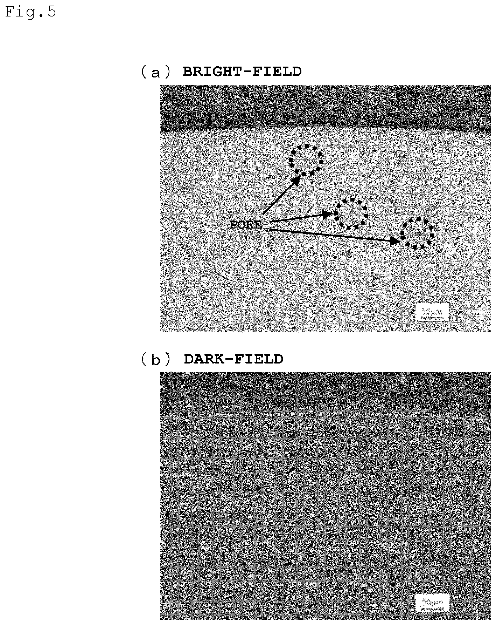

The ceramic ball of each of Examples and Comparative examples was cut and the section thereof was observed. The representative sectional images of Example 1 (see Figs. 3(a) and 3(b)), Example 18 (see Figs. 4(a) and 4(b)), and Comparative example 1 (see Figs. 5(a) and 5(b)) are exemplarily shown. In the figures, the figure (a) corresponds to a bright-field image, and the figure (b) corresponds to a dark-field image.

Example 1 shown in Figs. 3(a) and 3(b) has no pores in the surface layer portion and almost no snowflakes, which means dense silicon nitride sintered body. The same results are shown in Examples 2-17. Example 18 shown in Figs. 4(a) and 4(b) has no pores in the surface layer portion, but many snowflakes because much sintering additive is added thereto. The same results are shown in Examples 19-21, 23, and 24. Comparative example 1 of which the adding amount of the sintering additive is relatively small has some pores in the surface layer portion. Similar pores are shown in Comparative examples 2 and 3.

Measurement of crystal grain diameter and aspect ratio

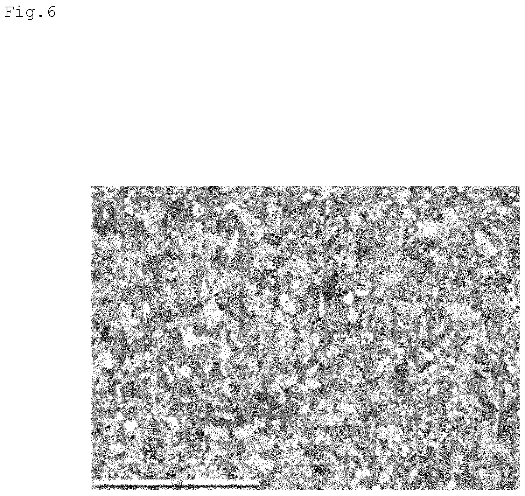

The ceramic ball of each of Examples and Comparative examples was measured by the EBSD method. A Field Emission Scanning Electron Microscope (FE-SEM) was used for the measurement. As shown in Fig. 1, a crystal orientation of the surface (observation field) of each ceramic ball as a test piece was analyzed. Fig. 6 shows an image of the crystal orientation map of the observation field. The map image is colored by the crystal orientation of the β-type Si$_3$N$_4$ particle. A group of the same crystal orientation within a range of 15-180 degrees in the crystal orientation is defined as one crystal grain diameter in the crystal orientation map image. The crystal grain diameter and the aspect ratio were calculated in a range where the sum of the area of the upper-size crystal grain diameter is 30% relative to the area of the total crystal grain diameter. The above-described range fulfills the confidence index (CI) of 0.1 or more in the analysis software.

Specifically, the area of each grain at each crystal orientation was obtained through the image analysis within the above-described range, and then the diameter of a circle (circle equivalent diameter) that is equal to the area was calculated based on the above-described formula (1). The mean of the diameters is defined as a crystal grain diameter (mean crystal grain diameter) . Further, a long side (L) and a short side (S) of each grain at each crystal orientation were obtained through the image analysis within the above-described range, and then the aspect ratio (L/S) was calculated. The mean of the aspect ratios is defined as an aspect ratio (mean aspect ratio).

The measurement was executed three times while changing an area to be analyzed on the surface of each ceramic ball, and the mean values thereof are calculated as the crystal grain diameter and the aspect ratio (the number of measurements is 3) . The magnification of the FE-SEM image used in this process was 2,000. The result is shown in Table 2.

Measurement of area ratio of snowflake

An image processing was executed on one visual field of a cutting image of the ceramic ball of each of Examples and Comparative examples so as to measure the area ratio of the snowflake. Image processing software WinRoof 2013 was employed for the image processing. The image obtained at magnification of 100 was binarized and the area ratio was calculated by the following formula (2).

Area ratio of snowflake (%) = Area of snowflake + total sectional area × 100 (2)

The "total sectional area" in the formula (2) denotes a total sectional area of the ceramic ball in one target visual field. Thus, the "total sectional area" includes the area of the snowflake. The result is shown in Table 2.

Crushing test

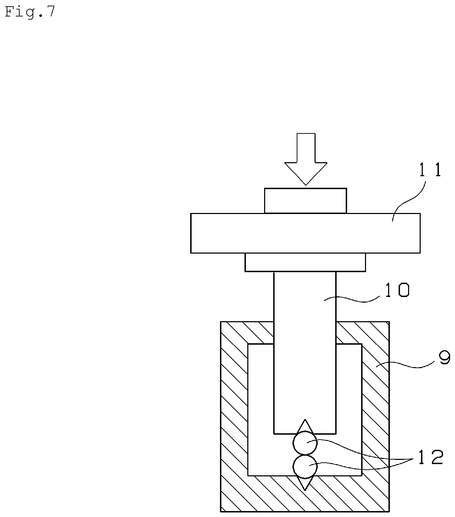

A two balls crushing test was executed on the ceramic ball of each of Examples and Comparative examples . The crushing test is based on JIS B 1501. As shown in Fig. 7, a crushing tester has a fixed jig 9 and a movable jig 10. The movable jig 10 is moved up and down by a cross head 11. Each of the fixed jig 9 and the movable jig 10 has a conical recess. Two test balls 12 are disposed between the recesses. A stroke speed of the cross head 11 is set to 1.0 × 10 mm/minute. A load when the test ball 12 is crushed was measured. The result is shown in Table 2.

Rolling fatigue test

In order to evaluate the rolling fatigue performance of a ceramic ball of each of Examples and Comparative examples, a rolling bearing of "deep groove ball bearing 6206" produced by NTN CORPORATION with each ceramic ball was prepared, and then a bearing lifetime (rolling lifetime) test was executed on the rolling bearing under the following condition. The censoring time (maximum test time) of the bearing lifetime test is set to 600 hours. The result is shown in Table 2.

Load (kN): Fr = 13.72 (6.86 kN/brg)

Maximum contact surface pressure (GPa) : 3.5 between inner ring and ball, 3.6 between outer ring and ball

Rotation speed (minute$^{-1}$) : 3,000

Lubrication oil: inorganic turbine oil VG56 produced by JXTG ENERGY CORPORATION

Lubrication oil supply temperature (°C): 50

Oil supply method: cleaning oil circulation

Table 2

| | Crystal grain diameter (μm) | Aspect ratio (L/S) | Area ratio of snowflake (%) | Crushing strength (kN) | Rolling fatigue lifetime (hours) |
|---|---|---|---|---|---|
| Example 1 | 1.18 | 3.55 | 2.07 | 22.8 | 600 < |
| Example 2 | 1.45 | 4.08 | 2.30 | 21.5 | 600 < |
| Example 3 | 1.22 | 3.82 | 2.12 | 23.8 | 600 < |
| Example 4 | 1.34 | 4.21 | 2.85 | 22.2 | 600 < |
| Example 5 | 1.18 | 3.11 | 2.04 | 23.3 | 600 < |
| Example 6 | 1.37 | 4.34 | 2.76 | 21.4 | 600 < |
| Example 7 | 1.62 | 4.01 | 2.63 | 21.8 | 600 < |
| Example 8 | 1.71 | 4.03 | 1.08 | 21.3 | 600 < |
| Example 9 | 2.32 | 4.44 | 1.24 | 23.4 | 600 < |
| Example 10 | 3.27 | 5.97 | 1.31 | 23.3 | 600 < |
| Example 11 | 1.21 | 3.05 | 2.10 | 22.4 | 600 < |
| Example 12 | 1.66 | 3.22 | 2.31 | 21.1 | 600 < |
| Example 13 | 1.52 | 3.33 | 2.21 | 22.2 | 600 < |

(continued)

| | Crystal grain diameter (μm) | Aspect ratio (L/S) | Area ratio of snowflake (%) | Crushing strength (kN) | Rolling fatigue lifetime (hours) |
|---|---|---|---|---|---|
| Example 14 | 1.61 | 3.50 | 2.76 | 21.5 | 600 < |
| Example 15 | 1.22 | 3.77 | 3.50 | 23.1 | 600 < |
| Example 16 | 1.55 | 3.82 | 4.31 | 22.2 | 600 < |
| Example 17 | 1.78 | 4.91 | 5.10 | 21.6 | 600 < |
| Example 18 | 1.81 | 4.51 | 7.32 | 23.0 | 421 |
| Example 19 | 1.89 | 4.60 | 8.21 | 22.5 | 411 |
| Example 20 | 1.76 | 4.55 | 7.11 | 23.4 | 432 |
| Example 21 | 1.78 | 4.45 | 7.56 | 22.2 | 426 |
| Example 22 | 3.11 | 5.76 | 1.42 | 23.1 | 210 |
| Example 23 | 2.10 | 5.20 | 8.45 | 23.4 | 285 |
| Example 24 | 2.21 | 5.28 | 7.50 | 22.7 | 360 |
| Comparative example 1 | 0.42 | 1.51 | 0.92 | 15.2 | 150 |
| Comparative example 2 | 0.80 | 2.11 | 1.01 | 17.0 | 172 |
| Comparative example 3 | 0.62 | 1.90 | 0.99 | 16.4 | 185 |

Crystal grain diameter and Aspect ratio

As shown in Table 2, in each of Comparative examples 1 to 3, the crystal grain diameter is less than 1 μm, which is smaller than those in Examples 1 to 24. This is because that the adding amount of the sintering additive in each of Comparative examples 1 to 3 is relatively small, which results in insufficient densifying by the sintering. In addition, the pore is caused due to the insufficient densifying, in the section observation (see Figs. 5 (a) and 5(b)). In each of Examples 1 to 24, the crystal grain diameter of the β-type silicon nitride particle is 1-4 μm and the aspect ratio thereof is 3-6. The crystal grain diameter and the aspect ratio become larger as the adding amount of the sintering additive is larger.

Area ratio of snowflake

There is a correlation between the adding amount of the sintering additive and the area ratio of the snowflake to some extent. In each of Examples 18-21, 23 and 24 in which the adding amounts of the sintering additive are relatively large, the area ratio of the snowflake exceed 7% (specifically, 7.11-8.45%). In the other Examples, the area ratios of the snowflake are less than 7%.

Crushing strength

In each of Examples 1 to 24, the crushing strength is 20 kN or more, while in each of Comparative examples 1 to 3, the crushing strength is less than 20 kN, which is inferior. It is considered that this result is affected by the pore that is observed in the section observation.

Rolling fatigue performance

In each of Examples 1 to 17, the test time exceeds the censoring time of 600 hours, so that the rolling fatigue test was ended at the censoring time. In each of Examples 18 to 24 and Comparative examples 1 to 3, flaking is caused before the censoring time of 600 hours. In each of Comparative examples 1 to 3, the flaking is caused in less than 200 hours, which is considered that the flaking is caused from the pore as a starting point. In each of Examples 18 to 21, 23 and 24, it is considered that the flaking is caused from the snowflake as a starting point. In Example 22, iron powder is added for improving the fracture toughness, however the adding amount of the iron powder is relatively large, so that the iron power is easily exposed to the sphere surface and the exposed iron powder is desulfied, which leads to the flaking.
According to the above-described result, from a viewpoint of the crushing strength, Examples 1 to 24 in which the crystal grain diameters of the β-type silicon nitride particle are 1-4 μm and the aspect ratios thereof are 3-6 within the specified measurement range, show superior results. Of these Examples, Examples 1 to 17 in which the area ratios of the snowflake are 7% or less, show superior results also in the rolling fatigue performance. Thus, the present invention can realize the silicon nitride sintered body that is superior in mechanical property and sliding property.

INDUSTRIAL APPLICABILITY

The silicon nitride sintered body of the present invention is superior in mechanical property and sliding property, and thus the silicon nitride sintered body is widely used as a machine part to which high mechanical property is required. For example, in a case in which the silicon nitride sintered body is applied to a bearing rolling element, flaking caused from a defect can be suppressed, and thus long lifetime can be realized.

REFERENCE SIGNS LIST

| | |
|---|---|
| 1: | rolling bearing |
| 2: | inner ring |
| 3: | outer ring |
| 4: | rolling element |
| 5: | cage |
| 6: | seal member |
| 7: | grease |
| 8a, 8b: | opening |
| 9: | fixed jig |
| 10: | movable jig |
| 11: | cross head |
| 12: | test ball |

**Claims**

1. A silicon nitride sintered body comprising a silicon nitride particle, a rare earth element and an aluminum element, wherein, in a range in which the sum of the area of the upper-size crystal grain diameter within a range where the crystal grain diameter of a β-type $Si_3N_4$ particle in the silicon nitride sintered body has the crystal orientation of 15-180 degrees, is 30% relative to an area of the total crystal grain diameter, the crystal grain diameter of the β-type $Si_3N_4$ particle is 1-4 μm by circle equivalent diameter and/or the aspect ratio of the β-type $Si_3N_4$ particle is 3-6.

2. The silicon nitride sintered body as defined in claim 1, comprising at least one metal element selected from among Ti, Zr, Hf, W, Mo, Ta, Nb, Fe, and Cr.

3. The silicon nitride sintered body as defined in claim 1, wherein:

   the silicon nitride sintered body comprises Fe, and
   the content of Fe is less than 0.5 wt% relative to the total weight of the silicon nitride sintered body.

4. The silicon nitride sintered body as defined in claim 1, wherein a ratio of an area of a snowflake in an image of a section of the silicon nitride sintered body acquired at the magnification of 100 is 7% or less relative to the total sectional area in the image.

5. The silicon nitride sintered body as defined in claim 1, wherein the crushing strength of a 3/8 inch ball formed of the silicon nitride sintered body is 20 kN or more.

6. A silicon nitride sintered body comprising a silicon nitride particle, a rare earth element and an aluminum element, wherein a ratio of an area of a snowflake in an image of a section of the silicon nitride sintered body acquired at the magnification of 100 is 7% or less relative to the total sectional area in the image.

7. A machine part comprising the silicon nitride sintered body as defined in claim 1.

8. The machine part as defined in claim 7, configured as a bearing rolling element.

9. The machine part as defined in claim 8, wherein the bearing rolling element has a rolling lifetime of 600 hours or more measured by a radial-type bearing tester under a condition of the maximum contact surface pressure of 3.6 GPa and the rotation speed of 3,000 minute$^{-1}$.

10. A bearing comprising the machine part as defined in claim 7, as a bearing component.

Fig.1

DETECTOR

ELECTRON RAY

TEST PIECE

Fig.2

Fig.3

（a） BRIGHT-FIELD

（b） DARK-FIELD

Fig.4

（ａ）BRIGHT-FIELD

（ｂ）DARK-FIELD

Fig.5

（a）**BRIGHT-FIELD**

（b）**DARK-FIELD**

Fig.6

Fig.7

**EP 4 397 643 A1**

<table>
<tr><td colspan="2">INTERNATIONAL SEARCH REPORT</td><td>International application No.<br><br>**PCT/JP2022/031184**</td></tr>
</table>

**A. CLASSIFICATION OF SUBJECT MATTER**

*C04B 35/596*(2006.01)i; *F16C 19/06*(2006.01)i; *F16C 33/32*(2006.01)i
FI:  C04B35/596; F16C19/06; F16C33/32

According to International Patent Classification (IPC) or to both national classification and IPC

**B. FIELDS SEARCHED**

Minimum documentation searched (classification system followed by classification symbols)

C04B35/596; F16C19/06; F16C33/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/111307 A1 (KABUSHIKI KAISHA TOSHIBA) 18 September 2008 (2008-09-18)<br>paragraphs [0027], [0029], [0033], [0034], [0039], [0040], table 1, example 6 | 1-10 |
| A | WO 2014/200014 A1 (KABUSHIKI KAISHA TOSHIBA) 18 December 2014 (2014-12-18)<br>paragraph [0046] | 1-10 |
| X | WO 2009/128386 A1 (KABUSHIKI KAISHA TOSHIBA) 22 October 2009 (2009-10-22)<br>paragraphs [0057], [0099], [0100], [0119], tables 1, 4, example 2 | 1-4, 6-10 |
| A | paragraph [0042] | 5 |
| X | WO 2011/102298 A1 (KABUSHIKI KAISHA TOSHIBA) 25 August 2011 (2011-08-25)<br>paragraphs [0048], [0102]-[0104], [0121], tables 1, 4, example 1 | 1-4, 6-10 |
| A | | 5 |
| X | JP 2011-140416 A (NIKKATO CORP) 21 July 2011 (2011-07-21)<br>paragraphs [0025], [0044], [0045], [0051], [0052], [0056], fig. 5, 6, example 5 | 1-10 |

☑ Further documents are listed in the continuation of Box C.       ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>**12 October 2022** | Date of mailing of the international search report<br>**01 November 2022** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

# EP 4 397 643 A1

<table>
<tr><td colspan="2" align="center">**INTERNATIONAL SEARCH REPORT**</td><td>International application No.<br><br>**PCT/JP2022/031184**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| X | JP 2010-241616 A (KABUSHIKI KAISHA TOSHIBA) 28 October 2010 (2010-10-28) paragraphs [0024], [0056]-[0059], [0064], table 1, example 1 | 1-4, 6-10 |
| A | | 5 |
| X | JP 2008-285349 A (KABUSHIKI KAISHA TOSHIBA) 27 November 2008 (2008-11-27) paragraphs [0022], [0024], [0035], [0039]-[0041], tables 1, 4, example 1 | 1-4, 6-10 |
| A | | 5 |
| X | JP 2014-231460 A (NGK SPARK PLUG CO) 11 December 2014 (2014-12-11) paragraphs [0001], [0046], [0053], tables 1, 2, sample 19 | 1-4, 6-8, 10 |
| A | | 5, 9 |
| X | JP 3-131572 A (SUMITOMO ELECTRIC IND LTD) 05 June 1991 (1991-06-05) p. 4, lower left column, line 11 to p. 4, lower right column, line 1, p. 4, lower right column, line 15 to p. 5, upper left column, line 10, table 3 | 1-4, 6 |
| A | | 5, 7-10 |
| A | JP 2003-063870 A (KABUSHIKI KAISHA TOSHIBA) 05 March 2003 (2003-03-05) entire text, all drawings | 1-10 |

Form PCT/ISA/210 (second sheet) (January 2015)

21

## INTERNATIONAL SEARCH REPORT
### Information on patent family members

International application No.

**PCT/JP2022/031184**

| Patent document cited in search report | | | Publication date (day/month/year) | Patent family member(s) | | | Publication date (day/month/year) |
|---|---|---|---|---|---|---|---|
| WO | 2008/111307 | A1 | 18 September 2008 | US 2010/0054652 A1 paragraphs [0029], [0031], [0035], [0036], [0041], [0042], table 1, example 6 CN 101636366 A CN 104692806 A | | | |
| WO | 2014/200014 | A1 | 18 December 2014 | US 2016/0137556 A1 paragraph [0051] | | | |
| WO | 2009/128386 | A1 | 22 October 2009 | US 2011/0039068 A1 paragraphs [0080], [0141], [0142], [0143], [0164], [0165], tables 1, 4, example 2 EP 2266935 A1 | | | |
| WO | 2011/102298 | A1 | 25 August 2011 | US 2012/0321851 A1 paragraphs [0063], [0140]-[0144], [0162], [0163], tables 1, 4, example 1 EP 2537819 A1 CN 102762520 A CN 106966735 A | | | |
| JP | 2011-140416 | A | 21 July 2011 | US 2012/0274941 A1 paragraphs [0073]-[0075], [0118]-[0123], [0132], [0133], [0141], fig. 5, 6, example 5 WO 2011/083624 A1 EP 2522644 A1 CN 102918006 A CN 103954635 A | | | |
| JP | 2010-241616 | A | 28 October 2010 | (Family: none) | | | |
| JP | 2008-285349 | A | 27 November 2008 | (Family: none) | | | |
| JP | 2014-231460 | A | 11 December 2014 | (Family: none) | | | |
| JP | 3-131572 | A | 05 June 1991 | US 5225127 A column 5, lines 18-35, column 6, lines 14-35, table 3 EP 409193 A2 DE 69008064 C | | | |
| JP | 2003-063870 | A | 05 March 2003 | (Family: none) | | | |

Form PCT/ISA/210 (patent family annex) (January 2015)

**EP 4 397 643 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06122563 A